Europäisches Patentamt

European Patent Office

Office européen des brevets

(19)

(11) Publication number: **0 356 177**
A1

## EUROPEAN PATENT APPLICATION

(12)

(21) Application number: 89308428.5

(22) Date of filing: 18.08.89

(51) Int. Cl.⁵: **B 01 D 63/10**
// B01D61/36, F24F3/14,
B01D53/22

(30) Priority: 19.08.88 JP 109018/88

(43) Date of publication of application:
28.02.90 Bulletin 90/09

(84) Designated Contracting States:
AT BE CH DE ES FR GB GR IT LI LU NL SE

(71) Applicant: JAPAN GORE-TEX, INC.
42-5, 1-chome Akazutsumi
Setagaya-ku Tokyo 156 (JP)

(72) Inventor: Kitada, Fumiko c/o Japan Gore-Tex, Inc.
Okayama Plant 123, Minamigata Yoshinaga-Cho
Wake-Gun Okayama-Ken (JP)

Kikukawa, Hiroyasu c/o Japan Gore-Tex, Inc.
Okayama Plant 123, Minamigata Yoshinaga-Cho
Wake-Gun Okayama-Ken (JP)

(74) Representative: Foster, David Martyn et al
MATHISEN MACARA & CO. The Coach House 6-8
Swakeleys Road
Ickenham Uxbridge UB10 8BZ (GB)

(54) Spiral module fluid treatment device.

(57) A spiral module primarily for separating liquids and gases,
comprises a functional membrane bag (1,2), for example of
porous expanded polytetrafluoroethylene, provided with a tube
(5) defining a first fluid inlet (7) and a first fluid outlet (8) for the
passage of a fluid into and out of the bag respectively, the bag
having an interior partition (4) which causes fluid entering the
bag through the inlet to follow a substantially U-shaped flow
path (10) over the interior surface of the bag to the outlet, and a
spacer layer consisting of a fluid-permeable material on the
outside surface of the functional membrane bag, the bag and
the spacer layer being wound spirally around the tube (5) to
form a substantially cylindrical body, and the module being
provided with a second fluid inlet (A) and a second fluid outlet
(B) at opposite ends of the spacer layer.

FIG. 4

EP 0 356 177 A1

## Description

<div align="center">

### SPIRAL MODULE FLUID TREATMENT DEVICE

</div>

The present invention relates to fluid treatment devices, and in particular to a fluid treatment device of the spiral module type.

In recent years, various types of membranes have been developed for the purpose of concentrating or separating fluids, such as liquids and gases, by selectively allowing the passage of such fluids. These membranes are generally referred to as functional membranes. Furthermore, various types of devices have been developed for the efficient treatment of fluids utilising functional membranes. A particularly compact device, known as a spiral module, is formed by wrapping functional membranes around a hollow tube.

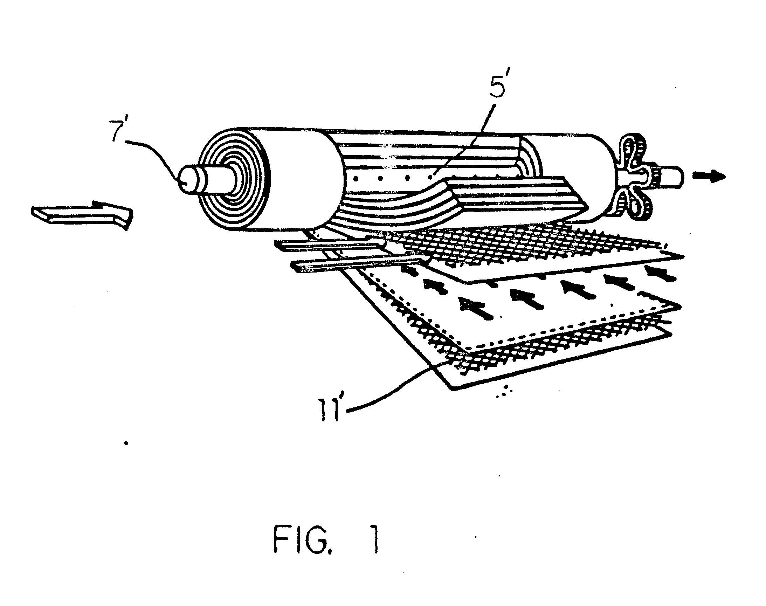

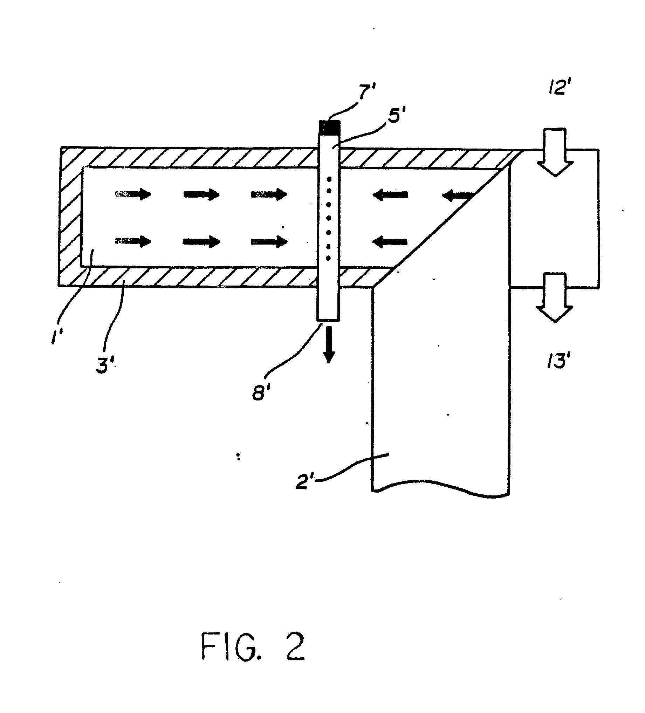

Spiral modules can be divided into two main types. One type is referred to as a cross-flow type spiral module, the principle of which is shown in Figures 1 and 2 of the accompanying drawings. In this type the secondary surfaces of two functional membranes 1' and 2' are laid together with a perforated tube 5' which is closed at one end 7' inserted between the membranes 1' and 2'. After the edges of the facing surfaces of the membranes 1' and 2' are bonded together by an adhesive 3', a spacer 11' is laminated to the membrane bag thus formed and the assembly is then rolled up around the tube 5' to form a cylindrical spirally wound body as shown in Figure 1. Since this spiral module is constructed so that the bonded portions of the functional membranes are located on the secondary sides of the membranes, the pressure of the primary-side fluid (indicated by the white arrows in Figures 1 and 2) flowing across the functional surfaces of the membranes acts so that the bonded portions of the membranes are constantly pushed together. Accordingly, there is no leakage from the bonded areas even if the device is operated at high-pressure. However, as can be seen from Figure 2, while the module is constructed so that there is both an inlet 12' and an outlet 13' for the primary-side fluid, there is only an outlet 8' for the fluid flowing across the secondary surfaces of the membranes. Accordingly, there are restrictions on the use of such a module.

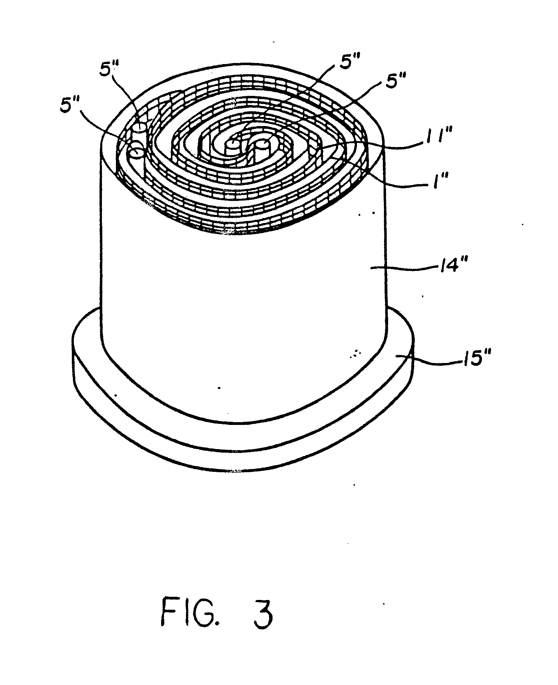

The other type of known spiral module is the parallel flow or counterflow type spiral module and is illustrated in Figure 3 of the drawings. In this type of module, two perforated tubes 5" are installed on the inside and outside of a wide belt-form functional membrane 1' at each end thereof. The membrane 1" is rolled up into a spiral together with a spacer 11", and the spiral is accommodated inside a cylindrical container 14". Since this module has inlets and outlets on both the primary side (functional side) of the membrane and the secondary side of the membrane, it can be used in a wide variety of applications. However, since the module is constructed using an adhesive on both the primary surface side and the secondary surface side of the functional membrane in the potting area 15" at the end of the container 14", high-pressure operation of the module is not possible.

According to the invention, there is provided a spiral module fluid treatment device comprising a functional membrane bag provided with a first fluid inlet and a first fluid outlet for the passage of a fluid into and out of the bag respectively, the bag having an interior partition which causes fluid entering the bag through the inlet to follow a labyrinthine flow path over the interior surface of the bag to the outlet, and a spacer layer consisting of a fluid-permeable material on the outside surface of the functional membrane bag, the bag and the spacer layer being wound spirally around the first fluid inlet and the first fluid outlet to form a substantially cylindrical body, and the module being provided with a second fluid inlet and a second fluid outlet at opposite ends of the spacer layer.

The invention provides a spiral module which is extremely compact and efficient, and in which there is no leakage of fluid components even in the case of high-pressure operation. Furthermore, since the module has inlets and outlets on both the primary side and the secondary side of the module, the device in accordance with the present invention can be used in the same applications as conventional parallel flow or counterflow type spiral modules, as well as conventional cross-flow type spiral modules.

A preferred embodiment of the device in accordance with the invention may be manufactured as follows. First, a tube is prepared with its interior divided into two parts about midway along its length, and fluid-passage holes formed in the wall of the tube on each side of the division. The tube is then placed across a pair of functional membranes which are laid together with their functional surfaces facing outwards, and the edges of the membranes are bonded together to form a bag from which the ends of the tube extend in a sealed manner. The interior surfaces of the bag are also bonded together, for example by an adhesive, along a median line extending from a point near the centre of the tube to a point between the centre and the edge of the bag on both sides of the tube. A spacer layer is then applied to the outside of the bag, and the assembly rolled up around the tube. An inlet and an outlet for the primary-side fluid which is to flow across the functional surfaces of the functional membranes (i.e., across the outside of the bag) are installed in the spacer layer portion at opposite ends of the cylindrical body formed by the spirally wound assembly constructed as described above.

The opposite open ends of the central hollow tube are used as an inlet and an outlet respectively for the secondary-side fluid, which, in use, is caused to flow over the inside surfaces of the functional membrane bag. The median line area where the two functional membranes of the bag are joined together acts as a partition which forms a substantially U-shaped flow path inside the bag on each side of the tube.

Unless otherwise specified herein, the dimensions and materials used in the manufacture of the spiral module in accordance with the invention (e.g., the hollow tube, the functional membranes, the spacer layer, and the functional membrane adhesive) may be the same as those used in the manufacture of conventional spiral modules. A person skilled in the art can appropriately select such materials, in accordance with the intended purpose.

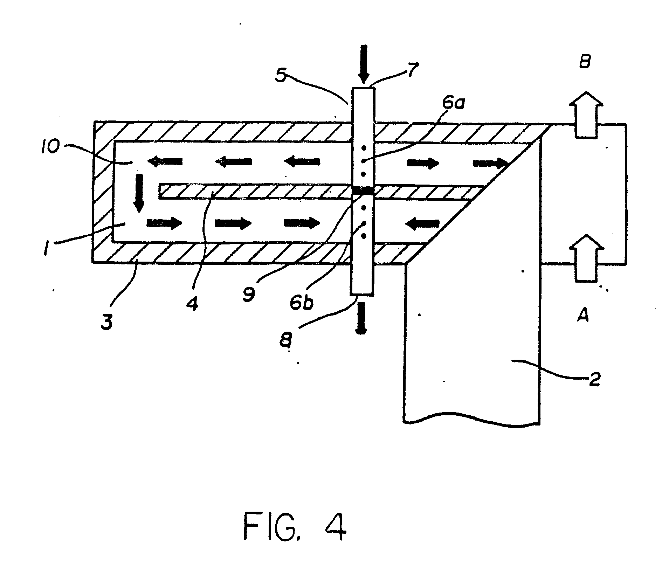

A particular example of a spiral module fluid treatment device in accordance with the invention will now be described with reference to Figure 4 of the accompanying diagrammatic drawings, in which:-

Figure 1 shows a partly cut away and opened out perspective view of a conventional cross-flow spiral module illustrating layers of the module;

Figure 2 shows a partially disassembled view of a functional membrane bag used in the conventional cross-flow spiral module of Figure 1, showing the secondary fluid outlet tube and illustrating the operation of the module;

Figure 3 is a perspective view of a conventional parallel-flow or counter-flow spiral module; and

Figure 4 is a view similar to that of Figure 2, but illustrating the membrane bag and operation of one example of the spiral module of the present invention.

Figure 4 shows a partially disassembled view of the functional membrane bag of a spiral module of the present invention. In this example the bag comprises a membrane 1 which is selectively permeable to water vapour, the membrane 1 being shown with its functional surface oriented downwards away from the viewer. A similar water-vapour-selective membrane 2 is laid on top of the membrane 1 with the functional surface of the membrane 2 oriented upwardly. In Figure 4, the membrane 2 is shown with a portion folded away from the membrane 1 to facilitate illustration of the internal construction and operation of the bag.

A tube 5, which is provided with holes 6a and 6b in its wall, a leading-end opening 7, a trailing-end opening 8, and a partitioning wall 9 which divides the interior space of the tube 5 into two parts (fore and aft), is sandwiched between the membranes 1 and 2. An area 3 is sealed by means of an adhesive, such as an epoxy resin adhesive or a silicone adhesive, to join the membranes and thereby form the bag. Similarly, a long, narrow adhesive-sealed area 4 extends along the middle of the membranes to the left and right of the tube 5 from the vicinity of its partitioning wall 9 to positions short of the ends of the membranes. When the two membranes 1 and 2 are laid together and joined, this sealed area 4 partitions the space inside the bag so that fluid flowing into the bag via the opening 7 and tube-wall holes 6a is caused to contact as large a membrane surface area as possible as it flows through the bag (as indicated by the black arrows in Figure 4) and out through the tube-wall holes 6b and the outlet opening 8. In cases where the device is used as a dehumidifying device, the inlet opening 7 of the tube 5 is connected to a tube that introduces dry air, while the outlet opening 8 is connected to a water vapour discharge tube.

In forming the spiral module, a spacer layer (not shown in the drawing) is laid over the functional surface sides of the membranes, and the assembly is rolled up around the tube 5 to form a spirally wound cylindrical body. The spacer functions to provide a space which forms a flow path for fluid, e.g. humid air, over the outside of the functional membrane bag within the module. This spacer may comprise, for example, a net or sponge made of polypropylene, polyester, nylon or polyethylene.

The water-vapour-selective membranes of the bag are made of a material whose air permeability is far smaller than its water vapour permeability. Examples of such membrane materials include fluororesin films, such as porous expanded polytetrafluoroethylene, preferably as described in U.S. patents 3,953,566; 4,187,390; 3,962,153; 4,096,227; 4,692,369; 4,598,011; 4,482,516; and 4,110,392, cellulose acetate resin films, and polyimide resin films. The thickness of the membranes used is appropriately selected so as to facilitate the passage of water vapour while preventing the passage of air, and if necessary a backing support may be used to reinforce the physical strength of each membrane. In this example, the thickness of the membranes is approximately 6 microns, and a reinforcing support is used which consists of a porous film made of a sythetic resin, such as polytetrafluoroethylene, with a thickness of approximately 50 microns, and a non-woven fabric of polypropylene, with a thickness of approximately 100 microns. This support is bonded to the secondary surfaces of the membranes in selected spots by thermal fusion.

In cases where the module is used as a dehumidifier, the cylindrical body is accommodated inside an appropriate protective container. Humid air which is to be dried is admitted, preferably under pressure, from one end of the module (A in Figure 4), and is caused to pass (as indicated by the white arrows) over the functional surfaces of the water-vapour-selective membranes, i.e. over the outside surface of the bag. As a result, water vapour is selectively allowed to pass into the interior of the membrane bag and dried air is discharged from the other end B of the module into a room where dry air is required.

In this case, a portion of the dry air discharged from the end B of the module, for example 10 to 20% thereof, may be recirculated into the spiral module via the dry air introduction tube connected to the inlet opening 7. This recirculated dry air moves through the flow path 10 in the direction indicated by the black arrows in Figure 4. During this movement, the dry air captures water vapour which has passed through the water vapour-selective membranes from the humid air flowing over the outside surfaces of the membranes. This air thus acts as a carrier which transports the water vapour to the outside via the outlet opening 8 at the water vapour discharge end of the module.

This form of spiral module is very economical compared to the conventional cross-flow type spiral module illustrated in Figure 1. The reason for this is that in the conventional module one end 7' of tube 5' is closed, so that there is no inlet for any carrier that might be used to discharge the water vapour.

Accordingly, it is necessary to use a vacuum discharge system in order to increase the discharge efficiency of the water vapour which has passed through the membranes (this water vapour being indicated by the black arrows in Figures 1 and 2). With a module in accordance with the invention, on the other hand, such a vacuum discharge system is unnecessary. Furthermore, in the case of the conventional counter-flow type spiral module shown in Figure 3 high-pressure operation is impossible, whereas the module of the present invention is able to provide efficient dehumidification by means of high-pressure operation.

The spiral module in accordance with the present invention can also be used as a humidifier. In this case, the functional membranes used are hydrophobic porous membranes. The air that is to be humidified is introduced into the module at one end (A in in Figure 4) and is caused to pass over the functional surfaces of the membranes at the outside surface of the bag. At the same time, hot or cold water is introduced via one of the open ends of the tube 5 in a dirction counter to the direction of flow of the air. This water is caused to flow through the flow path 10 and is discharged from the other open end of the tube 5. As a result, water vapour is selectively caused to pass from the hot water (or cold water) side to the air side of the membrane bag, so that air which has acquired moisture is discharged from the other end B of the module into the area which requires humid air.

The spiral module of the present invention can also be used as a pervaporization device. In this case, the functional membranes used are hydrophobic porous membranes. For example, in order to purify an aqueous solution of iodine containing impurities, the aqueous iodine solution is introduced into the module at one end (A in Figure 4) and is caused to flow over the functional surfaces of the membranes. At the same time, pure water is introduced via one of the open ends of the tube 5 in a direction counter to the direction of flow of the aqueous solution. This pure water is caused to flow through the flow path 10 and is discharged from the other open end of the tube 5. As a result, iodine vapour is selectively transferred to the pure water side via the functional membranes, so that a purified aqueous solution of iodine can be obtained from the outlet end of the flow path 10.

The spiral module of the present invention can also be used as a degassing/defoaming module. In this case, the functional membranes used are hydrophobic porous membranes.

A degassing/defoaming device formed using a module as described with reference to Figure 4 is superior in terms of vacuum efficiency compared to a conventional spiral module of the type shown in Figure 3 when used as a membrane type degassing/defoaming module. Specifically, in the case of the spiral module of Figure 3, the inside of the membrane bag must be used as the vacuum side (secondary side) for structural reasons. As a result, the length of the vacuum layer is increased, so that the vacuum efficiency drops. In the case of the module in accordance with the invention on the other hand, the inside of the membrane bag, i.e., the U-shaped flow path followed by the fluid, can be used as the primary side. In this case, the end 7 of the tube 5 is used as an inlet for the liquid that is to be treated (such as a liquid containing gas bubbles), while the end 8 is used as an outlet for the liquid after it has been subjected to the degassing/defoaming treatment. The outside of the membrane bag is used as the secondary side, and acts as a vacuum layer. As a result, the primary-side flow path is long and the secondary-side vacuum layer is short. Accordingly, degassing/defoaming can be performed with very good efficiency. Furthermore, although pressure is applied to the adhesive layer side in this example, the primary-side pressure is only about 0 to 5 $kg/cm^2G$ and accordingly there are no particular problems.

In the embodiment of the invention described, the structure of the bonded portions of the functional membranes is strong and high-pressure operation is accordingly possible. Furthermore, since respective inlets and outlets are installed both on the primary side and on the secondary side, the module can be used in a wide range of applications. In particular, a practical dehumidifier can be made using a module in accordance with the invention, whereas the use of a conventional spiral module for such a purpose is fraught with problems. It is to be understood that the term "fluid" as used herein is intended to refer to either liquids or gases, or both.

## Claims

1. A spiral module fluid treatment device comprising a functional membrane bag (1,2) provided with a first fluid inlet (7) and a first fluid outlet (8) for the passage of a fluid into and out of the bag respectively, the bag having an interior partition (4) which causes fluid entering the bag through the inlet to follow a labyrinthine flow path (10) over the interior surface of the bag to the outlet, and a spacer layer consisting of a fluid-permeable material on the outside surface of the functional membrane bag, the bag and the spacer layer being wound spirally around the first fluid inlet and the first fluid outlet to form a substantially cylindrical body, and the module being provided with a second fluid inlet (A) and a second fluid outlet (B) at opposite ends of the spacer layer.

2. A device according to claim 1 wherein the functional membrane (1,2) allows the passage of water vapour.

3. A device according to claim 1 wherein the functional membrane (1,2) is porous and hydrophobic.

4. A device according to any one of claims 1 to 3 wherein said functional membrane (1,2) comprises a porous polymer material.

5. A device according to claim 4 wherein the polymer comprises porous expanded polytetrafluoroethylene.

6. A device according to any one of the preceding claims wherein the bag is formed by a pair of functional membranes (1,2) which are bonded together at the edges (3).

7. A device according to any one of the preceding claims wherein the interior partition (4) of the bag causes the fluid to follow a substantially U-shaped path from the first fluid inlet (7) to the first fluid outlet (8).

8. A device according to any one of the preceding claims wherein the first fluid inlet (7) and the first fluid outlet (8) are formed by a partitioned, perforated tube (5) extending in a sealed manner into and out of the bag (1,2).

FIG. 1

FIG. 2

FIG. 3

FIG. 4

European Patent Office

EUROPEAN SEARCH REPORT

Application Number

EP 89 30 8428

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 088 459 (SHELL INTERNATIONALE RESEARCH MAATSCHAPPIJ B.V.) * Abstract; figure; claims 1-4,6; page 1, lines 1-9; page 2, lines 13-17; page 4, lines 3-33; page 5, line 19 - page 6, line 24 * | 1,6-8 | B 01 D 63/10 // B 01 D 61/36 F 24 F 3/14 B 01 D 53/22 |
| Y | | 2-5 | |
| X | US-A-3 872 014 (W.J. SCHELL) * Abstract; figures 2-6,9; claims 1,5,6,8,14; column 6, line 24 - column 9, ligne 32 * | 1,6-8 | |
| X | US-A-4 033 878 (G.E. FOREMAN) * Abstract; figures 1,4a; claim 1; column 3, lines 13-22; column 5, line 25 - column 7, line 11 * | 1,6-8 | |
| X | EP-A-0 208 883 (R. KOHLHEB) * Abstract; figure 1; claims 1,2,5,9; column 1, lines 4-23; column 4, line 22 - column 7, line 4 * | 1,6-8 | TECHNICAL FIELDS SEARCHED (Int. Cl.5) |
| Y | ENGINEERING, vol. 224, no. 4, April 1984, page 266, London, GB; "Expanded PTFE membrane allows high-efficiency distillation" * Whole document * | 2-5 | B 01 D A 61 M |

The present search report has been drawn up for all claims

| Place of search | Date of completion of the search | Examiner |
|---|---|---|
| THE HAGUE | 25-09-1989 | HOORNAERT P.G.R.J. |